(19) Europäisches Patentamt European Patent Office Office européen des brevets

(11) **EP 4 542 907 A1**

(12) **EUROPEAN PATENT APPLICATION**
published in accordance with Art. 153(4) EPC

(43) Date of publication:
**23.04.2025 Bulletin 2025/17**

(21) Application number: **23826214.1**

(22) Date of filing: **13.06.2023**

(51) International Patent Classification (IPC):
**H04L 5/00** (2006.01)

(52) Cooperative Patent Classification (CPC):
**H04B 17/309; H04L 1/00; H04L 5/00**

(86) International application number:
**PCT/CN2023/099956**

(87) International publication number:
**WO 2023/246565 (28.12.2023 Gazette 2023/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **20.06.2022 CN 202210696079**

(71) Applicant: **ZTE Corporation
Shenzhen, Guangdong 518057 (CN)**

(72) Inventor: **WEI, Hao
Shenzhen, Guangdong 518057 (CN)**

(74) Representative: **Savi, Massimiliano et al
Notarbartolo & Gervasi S.p.A.
Viale Achille Papa, 30
20149 Milano (IT)**

(54) **CHANNEL MEASUREMENT TRANSMISSION METHOD, BASE STATION, TERMINAL, STORAGE MEDIUM, AND PROGRAM PRODUCT**

(57) A method for channel measurement transmission, a base station, a terminal, a storage medium, and a program product are disclosed. The method for channel measurement transmission applied to a base station (100) includes: acquiring channel information between the base station (100) and a terminal device (200), and determining a channel variation metric parameter according to the channel information (S 100); and comparing the channel variation metric parameter with a preset threshold, and executing a channel measurement policy or a signal transmission policy for channel measurement transmission according to a result of the comparison (S200).

acquire channel information between the base station and a terminal device and determine a channel variation metric parameter according to the channel information — S100

compare the channel variation metric parameter with a preset threshold, and execute a channel measurement policy or a signal transmission policy according to a result of the comparison — S200

FIG. 2

## Description

## CROSS-REFERENCE TO RELATED APPLICATION

This application is filed on the basis of Chinese patent application No. 202210696079.0 filed June 20, 2022, and claims priority to the Chinese patent application, the entire contents of which are incorporated herein by reference.

## TECHNICAL FIELD

The present disclosure relates to the technical field of communication, and in particular, to a channel measurement transmission method, a base station, a terminal device, a storage medium, and a program product.

## BACKGROUND

At present, in order to achieve higher spectral efficiency, multi-antenna technologies have been widely used in wireless communication. Base stations form different weights for different antennas and then transmit signals to obtain beamforming gain to improve transmission performance. However, in actual communication, the channel will change as time goes on, and the channel measurement is performed periodically. If the channel changes too fast, the channel information obtained in a long measurement period will not match the channel used at the time of transmission. In this case, beamforming transmission will cause performance loss.

According to a method currently adopted in the industry, the base station calculates the moving speed of the terminal device according to the Doppler frequency shift calculated during channel estimation, so as to estimate the degree of channel variation and assist in beamforming transmission selection. However, due to the multipath characteristics of the actual channel, only an average Doppler frequency shift can be obtained during estimation. In addition, the Doppler frequency shift also includes the fixed frequency offset of the crystal oscillator, and factors such as the angle between the terminal device and the base station also need to be considered. Therefore, the process of calculating the moving speed of the terminal device to characterize the change of the channel is complex and fails to provide an accurate result.

## SUMMARY

Embodiments of the present disclosure provide a channel measurement transmission method, a base station, a terminal device, a storage medium, and a program product.

In accordance with a first aspect of the present disclosure, an embodiment provides a channel measurement transmission method, applied to a base station, the method including: acquiring channel information between the base station and a terminal device and determining a channel variation metric parameter according to the channel information; and comparing the channel variation metric parameter with a preset threshold, and executing a channel measurement policy or a signal transmission policy according to a result of the comparison.

In accordance with a second aspect of the present disclosure, an embodiment provides a channel measurement transmission method, applied to a terminal device, the method including: acquiring a pilot signal or a downlink channel matrix codebook; and sending the pilot signal or the downlink channel matrix codebook to a base station, such that the base station obtains channel information between the base station and the terminal device according to the pilot signal or the downlink channel matrix codebook, and executes a channel measurement policy or a signal transmission policy according to a preset threshold and a channel variation metric parameter determined by the channel information.

In accordance with a third aspect of the present disclosure, an embodiment provides a base station, including: a memory, a processor, and a computer program stored in the memory and executable by the processor, where the computer program, when executed by the processor, causes the processor to implement the channel measurement transmission method in accordance with the first aspect.

In accordance with a fourth aspect of the present disclosure, an embodiment provides a terminal device, including: a memory, a processor, and a computer program stored in the memory and executable by the processor, where the computer program, when executed by the processor, causes the processor to implement the channel measurement transmission method in accordance with the second aspect.

In accordance with a fifth aspect of the present disclosure, an embodiment provides a computer-readable storage medium, storing a computer-executable instruction which, when executed by a processor, causes the processor to implement the channel measurement transmission method described above.

In accordance with a sixth aspect of the present disclosure, an embodiment provides a computer program product, including a computer program or a computer instruction stored in a computer-readable storage medium, where the computer program or the computer instruction, when read from the computer-readable storage medium and executed by a processor of a computer device, causes the computer device to implement the channel measurement transmission method described above.

## BRIEF DESCRIPTION OF DRAWINGS

FIG. 1 is a schematic diagram of an implementation environment configured to execute a channel measurement transmission method according to an embodiment of the present disclosure;

FIG. 2 is a flowchart of a channel measurement transmission method for a base station side according to an embodiment of the present disclosure;

FIG. 3 is a flowchart of a channel measurement transmission method for a base station side according to another embodiment of the present disclosure;

FIG. 4 is a flowchart of a channel measurement transmission method for a base station side according to yet another embodiment of the present disclosure;

FIG. 5 is a flowchart of a channel measurement transmission method for a base station side according to yet another embodiment of the present disclosure;

FIG. 6 is a flowchart of a channel measurement transmission method for a base station side according to yet another embodiment of the present disclosure;

FIG. 7 is a flowchart of a channel measurement transmission method for a base station side according to yet another embodiment of the present disclosure;

FIG. 8 is a flowchart of a channel measurement transmission method for a base station side according to yet another embodiment of the present disclosure;

FIG. 9 is a flowchart of a channel measurement transmission method for a base station side according to yet another embodiment of the present disclosure;

FIG. 10 is a flowchart of a channel measurement transmission method for a terminal device side according to an embodiment of the present disclosure;

FIG. 11 is a flowchart of a channel measurement transmission method for a terminal device side according to another embodiment of the present disclosure;

FIG. 12 is a flowchart of a channel measurement transmission method for a terminal device side according to yet another embodiment of the present disclosure;

FIG. 13 is an overall flowchart of a channel measurement transmission method according to an embodiment of the present disclosure;

FIG. 14 is a schematic structural diagram of a base station according to an embodiment of the present disclosure; and

FIG. 15 is a schematic structural diagram of a terminal device according to an embodiment of the present disclosure.

## DETAILED DESCRIPTION

Objectives, technical schemes, and advantages of the present disclosure will be clearer will be detailed description of embodiments of the present disclosure in conjunction with accompanying drawings and examples. It should be understood that the specific embodiments described herein are merely used for illustrating the present disclosure, and are not intended to limit the present disclosure.

It should be noted that although logical orders have been shown in the flowcharts, in some cases, the steps shown or described may be executed in an order different from the orders as shown in the flowcharts. The terms such as "first", "second" and the like in the description, the claims, and the accompanying drawings are used to distinguish similar objects, and are not necessarily used to describe a specific sequence or a precedence order.

At present, in order to achieve higher spectral efficiency, multi-antenna technologies have been widely used in wireless communication. Base stations form different weights for different antennas and then transmit signals to obtain beamforming gain to improve transmission performance. However, in actual communication, the channel will change as time goes on, and the channel measurement is performed periodically. If the channel changes too fast, the channel information obtained in a long measurement period will not match the channel used at the time of transmission. In this case, beamforming transmission will cause performance loss.

According to a method currently adopted in the industry, the base station calculates the moving speed of the terminal device according to the Doppler frequency shift calculated during channel estimation, so as to estimate the degree of channel variation and assist in beamforming transmission selection. However, due to the multipath characteristics of the actual channel, only an average Doppler frequency shift can be obtained during estimation. In addition, the Doppler frequency shift also includes the fixed frequency offset of the crystal oscillator, and factors such as the angle between the terminal device and the base station also need to be considered. Therefore, the process of calculating the moving speed of the terminal device to characterize the change of the channel is complex and fails to provide an accurate result.

In view of the above, embodiments of the present disclosure provide a channel measurement transmission method, a base station, a terminal device, a storage medium, and a program product, which can simply and accurately calculate a channel variation metric, and can simply and effectively adjust a channel measurement period or select a corresponding signal transmission mode.

The embodiments of the present disclosure will be further described in detail below in conjunction with the accompanying drawings.

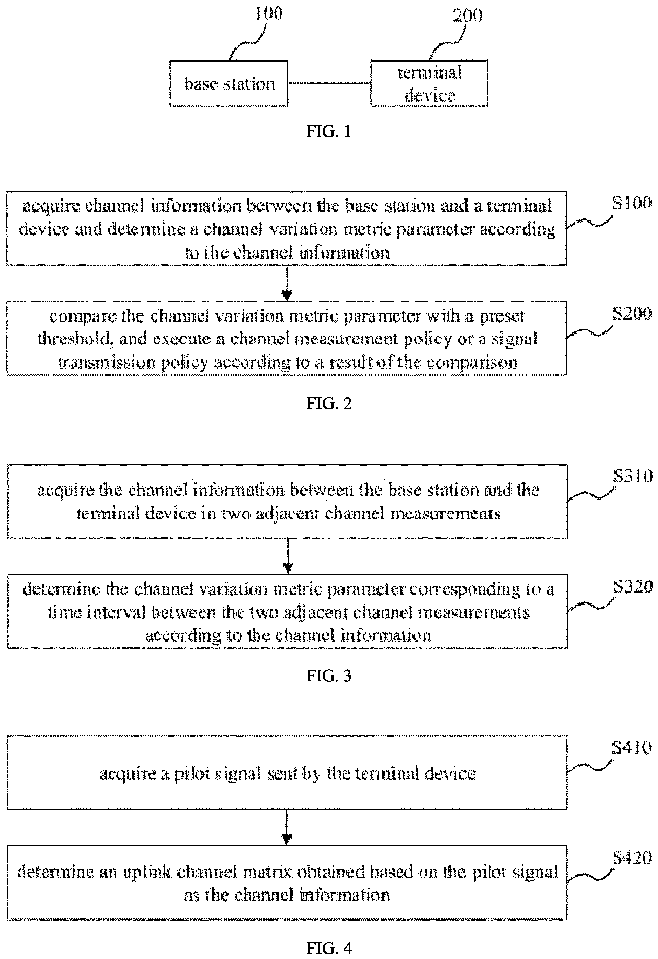

FIG. 1 is a schematic diagram of an implementation environment configured for executing a channel measurement transmission method according to an embodiment of the present disclosure.

In the example of FIG. 1, the implementation environment includes, but not limited to, a base station 100 and a terminal device 200. The base station 100 is in communication connection with the terminal device 200.

In an implementation, the relative position, number, etc., of the base station 100 and the terminal device 200 may be set according to specific application scenarios, and are not particularly limited in the embodiments of the present disclosure.

It can be understood by those having ordinary skills in the art that the implementation environment for executing the channel measurement transmission method may be applied to a 3rd Generation (3G) communication network system, an Long Term Evolution (LTE) communication network system, a 5th Generation (5G) communication network system, a 6th Generation (6G) communication network system, and future evolved mobile/-fixed communication network systems, etc., which is not particularly limited in the embodiments of the present disclosure.

Those having ordinary skills in the art may understand that the implementation environment shown in FIG. 1 does not constitute a limitation to the embodiments of the present disclosure, and more or fewer components than those shown in the figure may be included, or some components may be combined, or a different component arrangement may be used.

Based on the above implementation environment, various embodiments of a channel measurement transmission method for a base station side of the present disclosure are proposed below.

FIG. 2 is a flowchart of a channel measurement transmission method for a base station side according to an embodiment of the present disclosure. The channel measurement transmission method may be applied to the base station in FIG. 1 and includes, but not limited to, following steps S100 and S200.

At the step S100, channel information between the base station and a terminal device is acquired, and a channel variation metric parameter is determined according to the channel information.

At the step S200, the channel variation metric parameter is compared with a preset threshold, and a channel measurement policy or a signal transmission policy is executed according to a result of the comparison.

It should be noted that the channel information between the base station and the terminal device may be an uplink channel matrix estimated based on a pilot signal sent by the terminal device, or a downlink channel matrix codebook fed back by the terminal device based on a downlink channel measurement pilot signal sent by the base station, or other types of information. The type of the channel information between the base station and the terminal device is not particularly limited in the embodiments of the present disclosure.

In addition, it should be noted that the channel variation metric parameter may be a channel variation metric parameter corresponding to any two channel measurements with a time interval between the two channel measurements, and can characterize a channel variation metric corresponding to the two channel measurements with the time interval. The two channel measurements may be two adjacent channel measurements or two non-adjacent channel measurements.

In addition, it should be noted that a way for determining the channel variation metric parameter according to the channel information may be implemented by inputting a channel information parameter into a calculation formula to calculate the channel variation metric parameter, by looking up a table according to the channel information parameter to determine the channel variation metric parameter, by inputting the channel information parameter into a trained neural network model to calculate the channel variation metric parameter, or in other manners, which is not particularly limited in the embodiments of the present disclosure.

In addition, it should be noted that the result of the comparison between the channel variation metric parameter and the preset threshold includes the following cases: the channel variation metric parameter is greater than or equal to the preset threshold, or the channel variation metric parameter is less than the preset threshold. The corresponding channel measurement policy or signal transmission policy is executed depending on different comparison results in the embodiments of the present disclosure.

It can be understood that the preset threshold may be set in advance or may be set according to a preset rule and a current network environment, which is not particularly limited in the embodiments of the present disclosure.

It should be noted that according to the technical scheme of the embodiment of the present disclosure, a base station acquires channel information between the base station and a terminal device, and determines a channel variation metric parameter according to the channel information. Then, the base station compares the channel variation metric parameter with a preset threshold, and executes a channel measurement policy or a signal transmission policy according to a result of the comparison. According to the technical scheme of the embodiment of the present disclosure, the base station can simply and effectively calculate the channel variation metric parameter for characterizing the channel variation metric according to the channel information between the base station and the terminal device, and can also simply and effectively adjust the channel measurement period and select the corresponding signal transmission mode according to the result of the comparison between the channel variation metric parameter and the preset threshold.

FIG. 3 is a flowchart of a channel measurement transmission method for a base station side according to another embodiment of the present disclosure. Acquiring channel information between the base station and the terminal device and determining the channel variation metric parameter according to the channel information in the step S100 includes, but not limited to, following steps S310 and S320.

At the step S310, the channel information between the base station and the terminal device in two adjacent channel measurements is acquired.

At the step S320, the channel variation metric parameter corresponding to two adjacent channel measurements with a time interval between the two channel measurements is determined according to the channel information.

In an embodiment of the present disclosure, the channel information between the base station and the terminal device in two adjacent channel measurements may be acquired, and the channel variation metric parameter corresponding to the two adjacent channel measurements with the time interval can be determined according to the channel information.

It should be noted that in a case where the channel information between the base station and the terminal device in the embodiments of the present disclosure is the channel information between the base station and the terminal device in two adjacent channel measurements, the measurement can be performed in time for each period, such that the channel measurement policy or the signal transmission policy of a next period can be adjusted in timer.

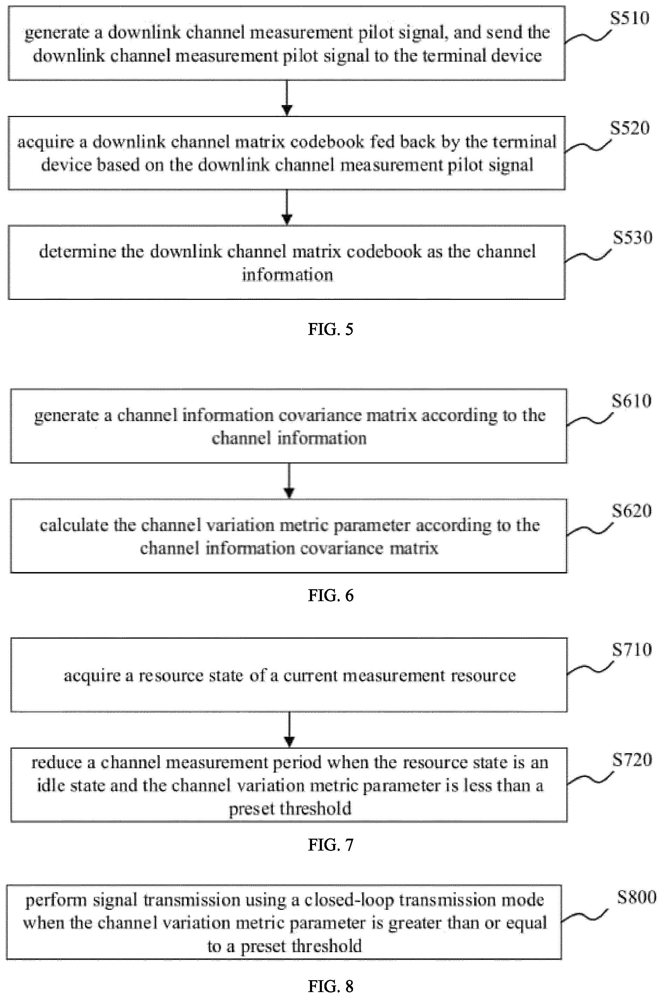

It should be noted that a method of acquiring channel information between the base station and the terminal device in the step S100 may include, but not limited to, two implementations in FIG. 4 and FIG. 5.

FIG. 4 is a flowchart of a channel measurement transmission method for a base station side according to yet another embodiment of the present disclosure. Acquiring channel information between the base station and the terminal device in the step S100 includes, but not limited to, following steps S410 and S420.

At the step S410, a pilot signal sent by the terminal device is acquired.

At the step S420, an uplink channel matrix is obtained based on the pilot signal as the channel information.

In an embodiment of the present disclosure, the base station can acquire a pilot signal sent by the terminal device, estimate an uplink channel matrix based on the pilot signal as the channel information, and then determine the channel variation metric parameter according to the channel information.

FIG. 5 is a flowchart of a channel measurement transmission method for a base station side according to yet another embodiment of the present disclosure. Acquiring channel information between the base station and the terminal device in the step S100 includes, but not limited to, following steps S510, S520, and S530.

At the step S510, a downlink channel measurement pilot signal is generated and sent to the terminal device.

At the step S520, a downlink channel matrix codebook is fed back by the terminal device based on the downlink channel measurement pilot signal.

At the step S530, the downlink channel matrix codebook is determined as the channel information.

In an embodiment of the present disclosure, the base station can generate a downlink channel measurement pilot signal, and then send the downlink channel measurement pilot signal to the terminal device. After receiving the downlink channel measurement pilot signal, the terminal device generates a downlink channel matrix codebook according to the downlink channel measurement pilot signal, and feeds back the downlink channel matrix codebook to the base station. Finally, after receiving the downlink channel matrix codebook, the base station determines the downlink channel matrix codebook as the channel information, and then determines the channel variation metric parameter according to the downlink channel matrix codebook.

FIG. 6 is a flowchart of a channel measurement transmission method for a base station side according to yet another embodiment of the present disclosure. Determining the channel variation metric parameter according to the channel information in the step S100 includes, but not limited to, following steps S610 and S620.

At the step S610, a channel information covariance matrix is generated according to the channel information.

At the step S620, the channel variation metric parameter is calculated according to the channel information covariance matrix.

In an embodiment of the present disclosure, after acquiring the channel information, the base station constructs a channel information covariance matrix according to the channel information, and calculates the channel variation metric parameter based on the constructed channel information covariance matrix and a matrix correlation, so as to characterize a channel variation metric corresponding to two channel measurements with the time interval.

In addition, it should be noted that generation of the channel information covariance matrix according to the channel information may be implemented by inputting the channel information parameter into a calculation formula to calculate the channel information covariance matrix, by looking up a table according to the channel information parameter, by inputting the channel information parameter into a trained neural network model to calculate the channel information covariance matrix, or in other manners, which is not particularly limited in the embodiments of the present disclosure.

It should be noted that comparing the channel variation metric parameter with the preset threshold and executing the channel measurement policy or the signal transmission policy according to a result of the comparison in the step S200 may include, but not limited to, three implementations in FIG. 7 to FIG. 9.

FIG. 7 is a flowchart of a channel measurement transmission method for a base station side according to yet another embodiment of the present disclosure. Executing the channel measurement policy according to a result of the comparison in the step S200 includes, but not limited to, following steps S710 and S720.

At S710, a resource state of a current measurement resource is acquired.

At S720, a channel measurement period is shortened when the resource state is an idle state and the channel variation metric parameter is less than a preset threshold.

In an embodiment of the present disclosure, after the channel variation metric parameter is compared with the preset threshold, if the result of comparison shows that the channel variation metric parameter is less than the preset threshold, it indicates that the channel correlation is low and the channel changes quickly. In this case, if there is an available measurement resource, the channel measurement policy adopted in the embodiment of the present disclosure is configured to shorten the measurement period and perform channel measurement again.

It should be noted that for an adjustment amount by which the measurement period is shortened, when the channel variation metric parameter is less than the preset threshold, the larger difference between the channel variation metric parameter and the preset threshold, the larger adjustment amount is required, and the smaller difference between the channel variation metric parameter and the preset threshold, the smaller adjustment amount is required.

FIG. 8 is a flowchart of a channel measurement transmission method for a base station side according to yet another embodiment of the present disclosure. Executing the signal transmission policy according to the result of the comparison in the step S200 includes, but not limited to, a following step S800.

At the step S800, signal transmission is performed using a closed-loop transmission mode when the channel variation metric parameter is greater than or equal to a preset threshold.

In an embodiment of the present disclosure, after the channel variation metric parameter is compared with the preset threshold, if the result of comparison shows that the channel variation metric parameter is greater than the preset threshold, it indicates that the channel correlation is high and the channel changes slowly. In this case, the signal transmission policy adopted in the embodiment of the present disclosure is configured to perform signal transmission between the base station and the terminal device using a closed-loop transmission mode, i.e., the signal transmission is adjusted according to the channel variation metric parameter.

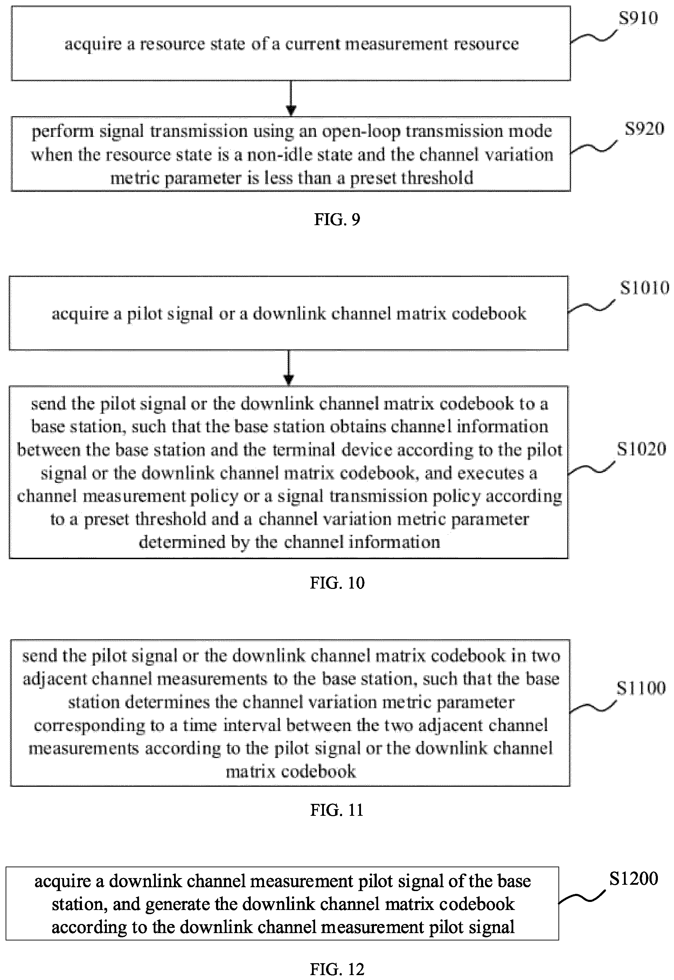

FIG. 9 is a flowchart of a channel measurement transmission method for a base station side according to yet another embodiment of the present disclosure. Executing the signal transmission policy according to the result of the comparison in the step S200 includes, but not limited to, following steps S910 and S920.

At the step S910, a resource state of a current measurement resource is acquired.

At the step S920, signal transmission is performed using an open-loop transmission mode when the resource state is a non-idle state and the channel variation metric parameter is less than a preset threshold.

In an embodiment of the present disclosure, after the channel variation metric parameter is compared with the preset threshold, if the result of comparison shows that the channel variation metric parameter is less than the preset threshold, but there is no available measurement resource, the channel measurement policy adopted in the embodiment of the present disclosure is configured to perform signal transmission between the base station and the terminal device using the open-loop transmission mode, i.e., the signal is transmitted directly without considering the channel variation metric parameter, not the closed-loop transmission mode.

Based on the above implementation environment and the channel measurement transmission method for the base station side, various embodiments of a channel measurement transmission method for a terminal device side of the present disclosure are proposed below.

FIG. 10 is a flowchart of a channel measurement transmission method for a terminal device side according to an embodiment of the present disclosure. The channel measurement transmission method may be applied to the terminal device in FIG. 1 and includes, but not limited to, following steps S1010 and S1020.

At the step S1010, a pilot signal or a downlink channel matrix codebook is acquired.

At the step S 1020, the pilot signal or the downlink channel matrix codebook is sent to a base station, such that the base station obtains channel information between the base station and the terminal device according to the pilot signal or the downlink channel matrix codebook, and executes a channel measurement policy or a signal transmission policy according to a preset threshold and a channel variation metric parameter determined by the channel information.

It should be noted that the channel information may be an uplink channel matrix estimated based on a pilot signal, or a downlink channel matrix codebook fed back by the terminal device based on a downlink channel measurement pilot signal sent by the base station, or other types of information. The type of the channel information between the base station and the terminal device is not particularly limited in the embodiments of the present disclosure.

In addition, it should be noted that the channel variation metric parameter may be a channel variation metric parameter corresponding to any two channel measurements with a time interval between the two channel measurements, and can characterize a channel variation metric corresponding to the two channel measurements with the time interval. The two channel measurements may be two adjacent channel measurements or two non-adjacent channel measurements.

In addition, it should be noted that determining of the channel variation metric parameter according to the channel information may be implemented by inputting a channel information parameter into a calculation formula to calculate the channel variation metric parameter, by looking up a table according to the channel information parameter to determine the channel variation metric parameter, by inputting the channel information parameter into a trained neural network model to calculate the channel variation metric parameter, or in other manners, which is not particularly limited in the embodiments of the present disclosure.

It can be understood that the preset threshold may be set in advance or may be set according to a preset rule and a current network environment, which is not particularly limited in the embodiments of the present disclosure.

According to the technical scheme of the embodiment of the present disclosure, a base station acquires channel information between the base station and a terminal device, and determines a channel variation metric parameter according to the channel information. Then, the base station compares the channel variation metric parameter with a preset threshold, and executes a channel measurement policy or a signal transmission policy according to a result of the comparison. According to the technical scheme of the embodiment of the present disclosure, the base station can simply and effectively calculate the channel variation metric parameter for characterizing the channel variation metric according to the channel information between the base station and the terminal device, and can also simply and effectively adjust the channel measurement period and select the corresponding signal transmission mode according to the result of the comparison between the channel variation metric parameter and the preset threshold.

It should be noted that the channel measurement transmission method for the terminal device side in the embodiment of the present disclosure corresponds to the channel measurement transmission method for the base station side in the above embodiments. Therefore, for specific implementations and technical effects of the channel measurement transmission method for the terminal device side in the embodiment of the present disclosure, reference may be made to the specific implementations and technical effects of the channel measurement transmission method for the base station side in the above embodiments.

FIG. 11 is a flowchart of a channel measurement transmission method for a terminal device side according to another embodiment of the present disclosure. Sending the pilot signal or the downlink channel matrix codebook to the base station in the step S1020 includes, but not limited to, a following step S1100.

At the step S1100, the pilot signal or the downlink channel matrix codebook in two adjacent channel measurements is sent to the base station, such that the base station determines the channel variation metric parameter corresponding to the two adjacent channel measurements with a time interval between the two channel measurements according to the pilot signal or the downlink channel matrix codebook.

In an embodiment of the present disclosure, the channel information between the base station and the terminal device in two adjacent channel measurements may be acquired, and the channel variation metric parameter corresponding to two adjacent channel measurements with the time interval can be determined according to the channel information.

It should be noted that in a case where the channel information between the base station and the terminal device in the embodiments of the present disclosure is the channel information between the base station and the terminal device in two adjacent channel measurements, the measurement can be performed in time for each period, such that the channel measurement policy or the signal transmission policy of the next period can be adjusted in time.

FIG. 12 is a flowchart of a channel measurement transmission method for a terminal device side according to yet another embodiment of the present disclosure. Acquiring the downlink channel matrix codebook includes, but not limited to, a following step S1200.

At S1200, a downlink channel measurement pilot signal of the base station is acquired, and the downlink channel matrix codebook is generated according to the downlink channel measurement pilot signal.

In an embodiment of the present disclosure, the base station can generate a downlink channel measurement pilot signal, and then send the downlink channel measurement pilot signal to the terminal device. After receiving the downlink channel measurement pilot signal, the terminal device generates a downlink channel matrix codebook according to the downlink channel measurement pilot signal, and feeds back the downlink channel matrix codebook to the base station. Finally, after receiving the downlink channel matrix codebook, the base station determines the downlink channel matrix codebook as the channel information, and then determines the channel variation metric parameter according to the downlink channel matrix codebook.

Based on the above implementation environment, the channel measurement transmission method for the base station side, and the channel measurement transmission method for the terminal device side, embodiments of an overall channel measurement transmission method of the present disclosure are proposed below.

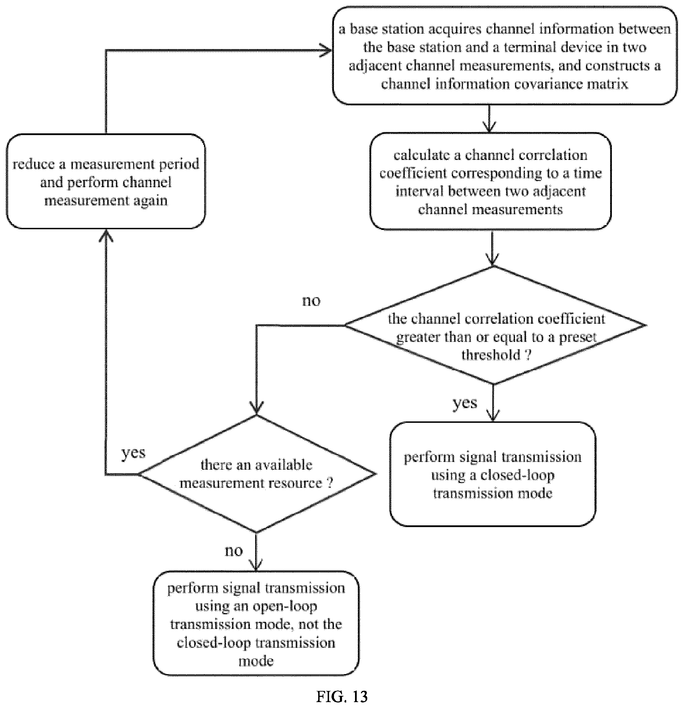

FIG. 13 is an overall flowchart of a channel measurement transmission method according to an embodiment of the present disclosure, including following steps.

Firstly, a base station acquires channel information between the base station and a terminal device in two adjacent channel measurements, and constructs a channel information covariance matrix. Then, the base station calculates a channel correlation coefficient, i.e., the channel variation metric parameter described above, based on the constructed channel information covariance matrix and a matrix correlation, so as to characterize a channel variation metric corresponding to two adjacent channel measurements with a time interval between the two channel measurements. Then, if the channel correlation coefficient is greater than or equal to a preset threshold, signal transmission is performed using a closed-loop transmission mode. If the channel correlation coefficient is less than the preset threshold and there is an available measurement resource, a measurement period is shortened and channel measurement is performed again. If the channel correlation coefficient is less than the preset threshold and there is no available measurement resource, signal transmission is performed using an open-loop transmission mode, not the closed-loop transmission mode.

The channel measurement transmission method of the embodiment of the present disclosure may be implemented on, for example, but not limited to, devices and chips such as a Digital Signal Processor (DSP), a Field-Programmable Gate Array (FPGA), an Application Specific Integrated Circuit (ASIC), etc.

Based on the above implementation environment, the channel measurement transmission method for the base station side, the channel measurement transmission method for the terminal device side, and the overall channel measurement transmission method, specific embodiments of the channel measurement transmission method of the present disclosure are proposed below.

Embodiment One:

It is assumed that the number of antennas configured in the terminal device is $N_{UE} = 2$, the number of antennas configured in the base station is $N_{BS} = 8$, an initial uplink channel measurement signal period is 80 ms, and a set threshold is 0.9.

At step one, the base station acquires channel information between the base station and the terminal device in two adjacent channel measurements, and constructs a channel information covariance matrix. It is assumed that the base station performs uplink channel estimation according to a pilot sent by the terminal device, where uplink channel coefficient matrices of two adjacent channel measurements are respectively $H_1$, $H_2$ $\in C^{N_{BS} \times K}$, and $0 < K \le N_{UE}$ means that the number of antennas used by the terminal device to send the pilot in uplink may be less than the number of antennas configured. Based on the channel information between the base station and the terminal device, the base station constructs channel information covariance matrices $R_1 =$

$$H_1 H_1^H, \ R_2 = H_2 H_2^H$$
.

At step two, the base station calculates a channel correlation coefficient based on the constructed channel information covariance matrices and a matrix correlation, so as to characterize a channel variation metric corresponding to two adjacent channel measurements with the time interval. A correlation coefficient between a 1st measurement and a 2nd measurement of a channel by the terminal device is $\rho_{1,2} = \dfrac{\text{tr}(R_1 R_2^H)}{\|R_1\|_F \|R_2\|_F}$, where $\text{tr}(\cdot)$ represents the trace of the matrix, $\|\cdot\|_F$ represents a Frobenius norm (F norm) of the matrix, and $\rho_{1,2} = \rho_{2,1}$. The calculated correlation coefficient result is $\rho_{1,2} = 0.92$ in this embodiment.

At step three, the channel correlation coefficient is compared with the set threshold. Because 0.92>0.9, it indicates that the channel correlation is high and the channel changes slowly. In this case, a signal is sent using a closed-loop beamforming transmission mode.

Embodiment Two:

It is assumed that the number of antennas configured in the terminal device is $N_{UE} = 2$, the number of antennas configured in the base station is $N_{BS} = 8$, an initial uplink channel measurement signal period is 80 ms, and a set threshold is 0.9.

At step one, the base station acquires channel information between the base station and the terminal device in two adjacent channel measurements, and constructs a channel information covariance matrix. It is assumed that the base station performs uplink channel estimation according to a pilot sent by the terminal device, where uplink channel coefficient matrices of two adjacent channel measurements are respectively $H_1$, $H_2$ $\in C^{N_{BS} \times K}$, and $0 < K \le N_{UE}$ means that the number of antennas used by the terminal device to send the pilot in uplink may be less than the number of antennas configured. Based on the channel information between the base station and the terminal device, the base station constructs channel information covariance matrices

$$R_1 = H_1 H_1^H, \ R_2 = H_2 H_2^H$$
.

At step two, the base station calculates a channel correlation coefficient based on the constructed channel information covariance matrices and a matrix correlation, so as to characterize a channel variation metric corresponding to two adjacent channel measurements with a time interval between the two channel measurements. A correlation coefficient between a 1st measurement and a 2nd measurement of the channel by the terminal device is $\rho_{1,2} = \dfrac{\text{tr}(R_1 R_2^H)}{\|R_1\|_F \|R_2\|_F}$, where $\text{tr}(\cdot)$ represents the trace of the matrix, $\|\cdot\|_F$ represents a F norm of the matrix, and $\rho_{1,2} = \rho_{2,1}$. The calculated correlation coefficient result is $\rho_{1,2} = 0.7$ in this embodiment.

At step three, the channel correlation coefficient is compared with the set threshold. Because 0.7<0.9, it indicates that the channel correlation is low and the channel changes quickly. In addition, it is determined that there is an available measurement resource. In this case, the measurement period is shortened to 40 ms to perform channel measurement again, and then the step one is performed again.

Embodiment Three:

It is assumed that the number of antennas configured in the terminal device is $N_{UE} = 2$, the number of antennas configured in the base station is $N_{BS} = 8$, an initial downlink channel measurement signal period is 40 ms, and a set threshold is 0.9.

At step one, the base station acquires channel information between the base station and the terminal device in two adjacent channel measurements, and constructs a channel information covariance matrix. It is assumed that the base station sends a downlink channel measurement pilot signal to the terminal device, and downlink channel matrix codebooks corresponding to two adjacent feedbacks from the terminal device are respectively $V_1$, $V_2 \in C^{N_{BS} \times L}$, where $0 < L \leq N_{UE}$ means that the number of direction vectors of the matrix fed back by the terminal device may be less than the number of antennas configured. Based on the channel information between the base station and the terminal device, the base station constructs channel information covariance matrices

$$R_1 = V_1 V_1^H, \ R_2 = V_2 V_2^H$$

.

At step two, the base station calculates a channel correlation coefficient based on the constructed channel information covariance matrices and a matrix correlation, so as to characterize a channel variation metric corresponding to two adjacent channel measurements with a time interval between the two channel measurements. A correlation coefficient between a 1st measurement and a 2nd measurement of a channel by the terminal device is

$$\rho_{1,2} = \frac{\mathrm{tr}\left(\mathbf{R_1 R_2^H}\right)}{\|\mathbf{R_1}\|_F \|\mathbf{R_2}\|_F}$$

, where $\mathrm{tr}(\cdot)$ represents the trace of the matrix, $\|\cdot\|_F$ represents a F norm of the matrix, and $\rho_{1,2} = \rho_{2,1}$. The calculated correlation coefficient result is $\rho_{1,2} = 0.6$ in this embodiment.

At step three, the channel correlation coefficient is compared with the set threshold. Because 0.6<0.9, it indicates that the channel correlation is low and the channel changes quickly. In addition, it is determined that there is no available measurement resource. In this case, signal transmission is performed using an open-loop transmission mode, not the closed-loop transmission mode.

Based on the above implementation environment, the channel measurement transmission method for the base station side, and the channel measurement transmission method for the terminal device side, embodiments of a base station, a terminal device, a storage medium, and a program product of the present disclosure are proposed below.

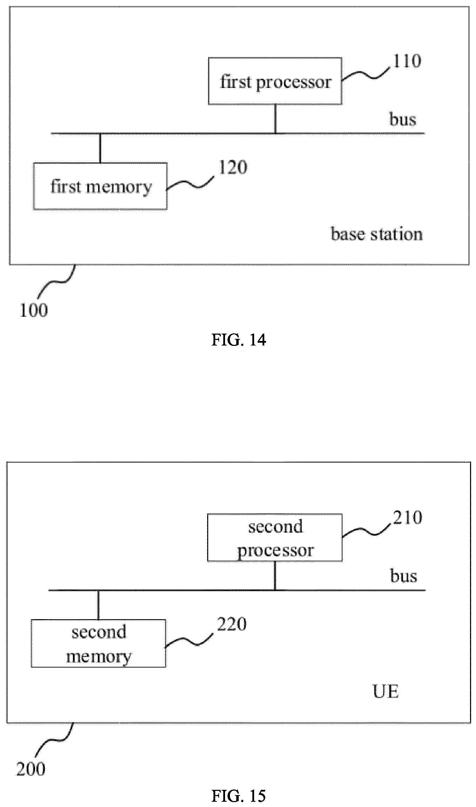

FIG. 14 is a schematic structural diagram of a base station according to an embodiment of the present disclosure. An embodiment of the present disclosure discloses a base station 100, including: a first memory 120, a first processor 110, and a computer program stored in the first memory 120 and executable by the first processor 110. The computer program, when executed by the first processor 110, causes the first processor 110 to implement the channel measurement transmission method for the base station side according to any one of the above embodiments.

The first memory 120, as a non-transitory computer-readable storage medium, may be configured to store a non-transitory software program and a non-transitory computer-executable program. In addition, the first memory 120 may include a high-speed random access memory, and may also include a non-transitory memory, e.g., at least one magnetic disk storage, flash memory, or other non-transitory solid-state storage. In some implementations, the first memory 120 may include a memory located remotely from the first processor 110, and the remote memory may be connected to the first processor 110 via a network. Examples of the network include, but not limited to, Internet, intranet, local area network, mobile communication network, and combinations thereof.

The base station 100 in this embodiment may correspond to the base station in the implementation environment in the embodiment shown in FIG. 1. The two embodiments belong to the same concept and therefore have the same implementation principle and technical effects, so the details will not be repeated here.

The non-transitory software program and instructions required to implement the channel measurement transmission method for the base station side in the foregoing embodiments are stored in the first memory 120. When the non-transitory software program and instructions are executed by the first processor 110, the non-transitory software program and instructions cause the first processor 110 to implement the channel measurement transmission method for the base station side in the foregoing embodiments, for example, implement the steps in FIG. 2 to FIG. 9 described above.

It should be noted that the base station 100 in the embodiment of the present disclosure can execute the channel measurement transmission method for the base station side in the above embodiments. Therefore, for specific implementations and technical effects of the base station 100 in the embodiment of the present disclosure, reference may be made to the specific implementations and technical effects of the channel measurement transmission method for the base station side in the above embodiments.

In addition, FIG. 15 is a schematic structural diagram of a terminal device according to an embodiment of the present disclosure. An embodiment of the present disclosure further discloses a terminal device 200, including: a second memory 220, a second processor 210, and a computer program stored in the second memory 220 and executable by the second processor 210. The computer program, when executed by the second processor 210, causes the second processor 210 to implement the channel measurement transmission method for the terminal device side according to any one of the above embodiments.

The second memory 220, as a non-transitory computer-readable storage medium, may be configured to store a non-transitory software program and a non-transitory computer-executable program. In addition, the second memory 220 may include a high-speed random access memory, and may also include a non-transitory memory, e.g., at least one magnetic disk storage, flash memory, or other non-transitory solid-state storage. In some implementations, the second memory 220 may include a memory located remotely from the second processor 210, and the remote memory may be connected to the second processor 210 via a network. Examples of the network include, but not limited to, Internet, intranet, local area network, mobile communication network, and combinations thereof.

The terminal device 200 in this embodiment may correspond to the terminal device in the implementation environment in the embodiment shown in FIG. 1. The two embodiments belong to the same concept and therefore have the same implementation principle and technical effects, so the details will not be repeated here.

The non-transitory software program and instructions required to implement the channel measurement transmission method for the terminal device side in the foregoing embodiments are stored in the second memory 220. When the non-transitory software program and instructions are executed by the second processor 210, the non-transitory software program and instructions cause the second processor 210 to implement the channel measurement transmission method for the terminal device side in the foregoing embodiments, for example, execute the steps in FIG. 10 to FIG. 12 described above.

It should be noted that the terminal device 200 in the embodiment of the present disclosure can execute the channel measurement transmission method for the terminal device side in the above embodiments. Therefore, for specific implementations and technical effects of the terminal device 200 in the embodiment of the present disclosure, reference may be made to the specific implementations and technical effects of the channel measurement transmission method for the terminal device side in the above embodiments.

In addition, an embodiment of the present disclosure discloses a computer-readable storage medium storing a computer-executable instruction which, when executed by a processor, causes the processor to implement the channel measurement transmission method according to any one of the above embodiments.

It should be noted that the computer-readable storage medium in the embodiment of the present disclosure can execute the channel measurement transmission method for the base station side or terminal device side in the above embodiments. Therefore, for specific implementations and technical effects of the computer-readable storage medium in the embodiment of the present disclosure, reference may be made to the specific implementations and technical effects of the channel measurement transmission method for the base station side or terminal device side in the above embodiments.

In addition, an embodiment of the present disclosure provides a computer program product, including a computer-readable storage medium storing a computer program or a computer instruction which, when read from the computer-readable storage medium and executed by a processor of a computer device, causes the computer device to implement the channel measurement transmission method according to any one of the above embodiments.

It should be noted that the computer program product in the embodiment of the present disclosure can execute the channel measurement transmission method for the base station side or terminal device side in the above embodiments. Therefore, for specific implementations and technical effects of the computer program product in the embodiment of the present disclosure, reference may be made to the specific implementations and technical effects of the channel measurement transmission method for the base station side or terminal device side in the above embodiments.

Those having ordinary skills in the art can understand that all or some of the steps in the methods disclosed above and the functional modules/units in the system and the apparatus can be implemented as software, firmware, hardware, and appropriate combinations thereof. Some or all physical components may be implemented as software executed by a processor, such as central processing unit, digital signal processor, or microprocessor, or as hardware, or as integrated circuit, such as application-specific integrated circuit. Such software may be distributed on a computer-readable medium, which may include a computer storage medium (or non-transitory medium) and a communication medium (or transitory medium). As well known to those having ordinary skills in the art, the term "computer storage medium" includes volatile and nonvolatile, removable and non-removable media implemented in any method or technology for storage of information (such as computer-readable instructions, data structures, program modules, or other data). The computer storage medium includes, but not limited to, Random Access Memory (RAM), ROM, Electrically Erasable Programmable Read-Only Memory (EEPROM), flash memory or other memory technology, Compact Disc Read-Only Memory (CD-ROM), Digital Versatile Disc (DVD) or other optical storage, cassette, magnetic tape, magnetic disk storage or other magnetic storage device, or any other medium which can be used to store the desired information and can be accessed by a computer. In addition, as well known to those having ordinary skills in the art, the communication medium typically includes computer-readable instructions, data structures, program modules, or other data in a modulated data signal such as carrier or other transport mechanism, and can include any information delivery medium.

**Claims**

1. A method for channel measurement transmission, applied to a base station, the method comprising:

   acquiring channel information between the base station and a terminal device, and determining a channel variation metric parameter according to the channel information; and
   comparing the channel variation metric parameter with a preset threshold, and executing a channel measurement policy or a signal transmission policy according to a result of the comparison.

2. The method of claim 1, wherein acquiring channel information between the base station and a terminal device, and determining a channel variation metric parameter according to the channel information comprises:
   acquiring the channel information between the base station and the terminal device in two adjacent channel measurements, and determining the channel variation metric parameter corresponding to the two adjacent channel measurements according to the channel information with a time interval between the two adjacent channel measurements.

3. The method of claim 1, wherein acquiring channel information between the base station and a terminal device comprises:

   acquiring a pilot signal sent by the terminal device, and determining an uplink channel matrix obtained based on the pilot signal as the channel information; or
   generating a downlink channel measurement pilot signal, sending the downlink channel measurement pilot signal to the terminal device, acquiring a downlink channel matrix codebook fed back by the terminal device based on the downlink channel measurement pilot signal, and determining the downlink channel matrix codebook as the channel information.

4. The method of claim 1, wherein determining a channel variation metric parameter according to the channel information comprises:

   generating a channel information covariance matrix according to the channel information; and calculating the channel variation metric parameter according to the channel information covariance matrix.

5. The method of any one of claims 1 to 4, wherein executing a channel measurement policy according to a result of the comparison comprises:
   acquiring a resource state of a current measurement resource, and shortening a channel measurement period in response to the resource state being an idle state and the channel variation metric parameter being less than a preset threshold.

6. The method of any one of claims 1 to 4, wherein executing a signal transmission policy according to a result of the comparison comprises at least one of:

   performing signal transmission using a closed-loop transmission mode in response to the channel variation metric parameter being greater than or equal to a preset threshold; or
   acquiring a resource state of a current measurement resource, and performing signal transmission using an open-loop transmission mode in response to the resource state being a non-idle state and the channel variation metric parameter being less than a preset threshold.

7. A method for channel measurement transmission, applied to a terminal device, the method comprising:

   acquiring a pilot signal or a downlink channel matrix codebook; and
   sending the pilot signal or the downlink channel matrix codebook to a base station, such that the base station obtains channel information between the base station and the terminal device according to the pilot signal or the downlink channel matrix codebook, and executes a channel measurement policy or a signal transmission policy according to a preset threshold and a channel variation metric parameter determined by the channel information.

8. The method of claim 7, wherein

   acquiring a pilot signal comprises acquiring the pilot signal in two adjacent channel measurements; or
   acquiring a downlink channel matrix codebook comprises acquiring the downlink channel matrix codebook in two adjacent channel measurements.

9. The method of claim 7, wherein acquiring a downlink channel matrix codebook comprises:
acquiring a downlink channel measurement pilot signal of the base station, and generating the downlink channel matrix codebook according to the downlink channel measurement pilot signal.

10. A base station, comprising: a memory, a processor, and a computer program stored in the memory and executable by the processor, wherein the computer program, when executed by the processor, causes the processor to perform the method for channel measurement transmission of any one of claims 1 to 6.

11. A terminal device, comprising: a memory, a processor, and a computer program stored in the memory and executable by the processor, wherein the computer program, when executed by the processor, causes the processor to perform the method for channel measurement transmission of any one of claims 7 to 9.

12. A computer-readable storage medium storing a computer-executable instruction which, when executed by a processor, causes the processor to perform the method for channel measurement transmission of any one of claims 1 to 6, or the method for channel measurement transmission of any one of claims 7 to 9.

13. A computer program product comprising a computer-readable storage medium storing a computer program or a computer instruction which, when read from the computer-readable storage medium and executed by a processor of a computer device, causes the computer device to perform the method for channel measurement transmission of any one of claims 1 to 6 or the method for channel measurement transmission of any one of claims 7 to 9.

100                                   200

| base station | | terminal device |

FIG. 1

| acquire channel information between the base station and a terminal device and determine a channel variation metric parameter according to the channel information | S100 |

| compare the channel variation metric parameter with a preset threshold, and execute a channel measurement policy or a signal transmission policy according to a result of the comparison | S200 |

FIG. 2

| acquire the channel information between the base station and the terminal device in two adjacent channel measurements | S310 |

| determine the channel variation metric parameter corresponding to a time interval between the two adjacent channel measurements according to the channel information | S320 |

FIG. 3

| acquire a pilot signal sent by the terminal device | S410 |

| determine an uplink channel matrix obtained based on the pilot signal as the channel information | S420 |

FIG. 4

generate a downlink channel measurement pilot signal, and send the downlink channel measurement pilot signal to the terminal device — S510

acquire a downlink channel matrix codebook fed back by the terminal device based on the downlink channel measurement pilot signal — S520

determine the downlink channel matrix codebook as the channel information — S530

FIG. 5

generate a channel information covariance matrix according to the channel information — S610

calculate the channel variation metric parameter according to the channel information covariance matrix — S620

FIG. 6

acquire a resource state of a current measurement resource — S710

reduce a channel measurement period when the resource state is an idle state and the channel variation metric parameter is less than a preset threshold — S720

FIG. 7

perform signal transmission using a closed-loop transmission mode when the channel variation metric parameter is greater than or equal to a preset threshold — S800

FIG. 8

acquire a resource state of a current measurement resource — S910

perform signal transmission using an open-loop transmission mode when the resource state is a non-idle state and the channel variation metric parameter is less than a preset threshold — S920

FIG. 9

acquire a pilot signal or a downlink channel matrix codebook — S1010

send the pilot signal or the downlink channel matrix codebook to a base station, such that the base station obtains channel information between the base station and the terminal device according to the pilot signal or the downlink channel matrix codebook, and executes a channel measurement policy or a signal transmission policy according to a preset threshold and a channel variation metric parameter determined by the channel information — S1020

FIG. 10

send the pilot signal or the downlink channel matrix codebook in two adjacent channel measurements to the base station, such that the base station determines the channel variation metric parameter corresponding to a time interval between the two adjacent channel measurements according to the pilot signal or the downlink channel matrix codebook — S1100

FIG. 11

acquire a downlink channel measurement pilot signal of the base station, and generate the downlink channel matrix codebook according to the downlink channel measurement pilot signal — S1200

FIG. 12

a base station acquires channel information between the base station and a terminal device in two adjacent channel measurements, and constructs a channel information covariance matrix

calculate a channel correlation coefficient corresponding to a time interval between two adjacent channel measurements

the channel correlation coefficient greater than or equal to a preset threshold ?

no

yes

perform signal transmission using a closed-loop transmission mode

reduce a measurement period and perform channel measurement again

yes

there an available measurement resource ?

no

perform signal transmission using an open-loop transmission mode, not the closed-loop transmission mode

FIG. 13

FIG. 14

FIG. 15

# EP 4 542 907 A1

## INTERNATIONAL SEARCH REPORT

| International application No. |
|---|
| **PCT/CN2023/099956** |

### A. CLASSIFICATION OF SUBJECT MATTER

H04L5/00(2006.01)i

According to International Patent Classification (IPC) or to both national classification and IPC

### B. FIELDS SEARCHED

Minimum documentation searched (classification system followed by classification symbols)

IPC:H04L; H04W

Documentation searched other than minimum documentation to the extent that such documents are included in the fields searched

Electronic data base consulted during the international search (name of data base and, where practicable, search terms used)

CNKI, CNPAT, DWPI, CNTXT, ENTXT, ENTXTC, 3GPP: 信道, 测量, 阈值, 门限, 反馈, 开环, 闭环, 变化, 改变, 差, 相关性, channel, measurement, threshold, feedback, open Loop, closed Loop, variation, change, difference, correlation

### C. DOCUMENTS CONSIDERED TO BE RELEVANT

| Category* | Citation of document, with indication, where appropriate, of the relevant passages | Relevant to claim No. |
|---|---|---|
| X | CN 102917391 A (ZTE CORP.) 06 February 2013 (2013-02-06) <br> claims 12-20, and description, paragraph 0002 and paragraph 0062-paragraph 0115 | 1-13 |
| A | CN 101641923 A (LG ELECTRONICS INC.) 03 February 2010 (2010-02-03) <br> entire document | 1-13 |
| A | CN 102625358 A (ZTE CORP.) 01 August 2012 (2012-08-01) <br> entire document | 1-13 |
| A | US 2009274225 A1 (NES LABORATORIES AMERICA, INC.) 05 November 2009 (2009-11-05) <br> entire document | 1-13 |

☐ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **18 August 2023** | **23 August 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/099956**

| Patent document cited in search report | | | Publication date (day/month/year) | Patent family member(s) | | | Publication date (day/month/year) |
|---|---|---|---|---|---|---|---|
| CN | 102917391 | A | 06 February 2013 | None | | | |
| CN | 101641923 | A | 03 February 2010 | KR | 20080013473 | A | 13 February 2008 |
| | | | | WO | 2008018761 | A1 | 14 February 2008 |
| | | | | KR | 20080047111 | A | 28 May 2008 |
| | | | | CA | 2659878 | A1 | 14 February 2008 |
| | | | | AU | 2007282272 | A1 | 26 February 2009 |
| | | | | EP | 2050214 | A2 | 22 April 2009 |
| | | | | JP | 2010504656 | A | 12 February 2010 |
| | | | | US | 2010309793 | A1 | 09 December 2010 |
| CN | 102625358 | A | 01 August 2012 | None | | | |
| US | 2009274225 | A1 | 05 November 2009 | US | 2014334567 | A1 | 13 November 2014 |
| | | | | US | 2013094453 | A1 | 18 April 2013 |
| | | | | US | 2012224649 | A1 | 06 September 2012 |
| | | | | US | 2013230116 | A1 | 05 September 2013 |

Form PCT/ISA/210 (patent family annex) (July 2022)

**REFERENCES CITED IN THE DESCRIPTION**

**Patent documents cited in the description**

*   CN 202210696079